# EUROPEAN PATENT SPECIFICATION

(11) **EP 3 789 828 B1**
(45) Date of publication and mention of the grant of the patent: **21.08.2024**
(21) Application number: 20180954.8
(22) Date of filing: 18.06.2020
(51) Int. Cl.: G03G 15/00, G03G 21/16

(54) **IMAGE FORMING APPARATUS**
BILDERZEUGUNGSVORRICHTUNG
APPAREIL DE FORMATION D'IMAGES

(30) Priority: 27.06.2019 JP 2019120452
(43) Date of publication of application: 10.03.2021
(73) Proprietor: CANON KABUSHIKI KAISHA, OHTA-KU Tokyo 146-8501 (JP)
(72) Inventor: SEKIYAMA, Junichi, Ohta-ku, Tokyo 146-8501 (JP)
(74) Representative: Canon Europe Limited

(56) References cited:
- US-A1- 2015 307 311
- US-A1- 2019 129 357

## Description

### BACKGROUND OF THE INVENTION

### Field of the Invention

The present invention relates to image forming apparatuses, such as laser beam printers, copiers, and facsimile apparatuses.

### Description of the Related Art

A known image forming apparatus disclosed in Japanese Patent Application Laid-Open No. 2014-133624 having a cartridge and an apparatus main body to which the cartridge is detachably attached includes a frame with an opening portion used for attaching and detaching the cartridge, an opening and closing member that rotates between a position in which the opening and closing member blocks the opening portion and a position in which the opening and closing member exposes the opening portion and whose upper surface serves as a sheet stacking surface, and a discharging roller for discharging a sheet onto the stacking surface.

The opening and closing member is conceivably provided with a regulating wall configured to regulate the position of the trailing edge of the sheet stacked on the sheet stacking surface.

In recent years, the apparatus main body of the image forming apparatus has been reduced in size for reducing the installation space. Meanwhile, the cartridge has been increased in size due to, for example, an increase in capacity for toners. Thus, there is a demand for an image forming apparatus in which the opening and closing member can be opened and closed in a compact fashion without posing an impediment to the attachment and detachment processes of the cartridge and also without interfering with the apparatus main body. Document US2019/129357 discloses an image forming apparatus including a cartridge including an image carrying member and a positioning portion, and an apparatus main body. The apparatus main body including an opening portion, a rotatable opening and closing member, the opening and closing member including an engaging portion and being rotatable between a first position and a second position, an engaged portion, an abutment portion that determines a position of the attached cartridge, and a pressing portion applying pressing force to the cartridge. The opening and closing member rotates from the first position to the second position against counterforce of the pressing force, and the engaging portion is provided in an area of the opening and closing member that is closer to the rotational axis than an area of the opening and closing member that receives the counterforce.

### SUMMARY OF THE INVENTION

A first aspect of the present invention provides an image forming apparatus comprising: a cartridge; and an apparatus main body to which the cartridge is detachably attached, the apparatus main body including: a frame in which an opening portion, through which the cartridge is attached to the apparatus main body, is formed; an opening and closing member configured to move between an open position in which the opening and closing member is opened to expose the opening portion and a closed position in which the opening and closing member is closed to cover the opening portion, the opening and closing member having a supported portion supported by the frame so that the opening and closing member is rotatable about a rotational axis, the opening and closing member having a stacking surface on which a sheet is to be stacked when the opening and closing member is located in the closed position; a discharging roller configured to discharge the sheet in a discharging direction onto the stacking surface when the opening and closing member is located in the closed position; and a regulating wall configured to regulate a position of an upstream edge, in the discharging direction, of the sheet stacked on the stacking surface, the regulating wall extending from the stacking surface toward the discharging roller in a direction intersecting the discharging direction, the regulating wall being movably attached to the opening and closing member.

A second aspect of the present invention provides an image forming apparatus comprising: a cartridge; and an apparatus main body to which the cartridge is detachably attached, the apparatus main body including: a frame in which an opening portion, through which the cartridge is attached to the apparatus main body, is formed; a discharging roller configured to discharge a sheet in a discharging direction; an opening and closing member configured to move between an open position in which the opening and closing member is opened to expose the opening portion and a closed position in which the opening and closing member is closed to cover the opening portion, the opening and closing member having a supported portion supported by the frame so that the opening and closing member is rotatable about a rotational axis, the opening and closing member having a stacking surface on which the sheet discharged by the discharging roller is to be stacked when the opening and closing member is located in the closed position, the supported portion being movable between a first position and a second position located downstream of the first position in the discharging direction, the supported portion being located in the first position when the opening and closing member is located in the closed position and being located in the second position when the opening and closing member is located in the open position; and a regulating wall configured to regulate a position of an upstream edge, in the discharging direction, of the sheet stacked on the stacking surface, the regulating wall extending from the stacking surface toward the discharging roller in a direction intersecting the discharging direction, the regulating wall being attached to the opening and closing member.

Further features of the present invention will become apparent from the following description of exemplary embodiments with reference to the attached drawings. Each of the embodiments of the present invention described below can be implemented solely or as a combination of a plurality of the embodiments or features thereof where necessary or where the combination of elements or features from individual embodiments in a single embodiment is beneficial.

### BRIEF DESCRIPTION OF THE DRAWINGS

FIG. 1 is a cross-sectional view illustrating the overall configuration of an image forming apparatus according to a first embodiment.
FIG. 2 is an enlarged cross-sectional view of the image forming apparatus, illustrating an enlarged view of a discharging roller and the vicinity thereof when an opening and closing member is located in a closed position, in accordance with the first embodiment.
FIG. 3 is a perspective view of the image forming apparatus, illustrating an enlarged view of the discharging roller and the vicinity thereof when the opening and closing member is located in the closed position, in accordance with the first embodiment.
FIG. 4 is an enlarged cross-sectional view of the image forming apparatus, illustrating an enlarged view of the discharging roller and the vicinity thereof when the opening and closing member is located in the closed position, in accordance with the first embodiment.
FIG. 5 is a perspective view of the opening and closing member according to the first embodiment.
FIG. 6A is a cross-sectional view of a position in which a cam surface near the discharging roller is located when the opening and closing member is located in the closed position, in accordance with the first embodiment.
FIG. 6B is a cross-sectional view of a position in which a regulating wall near the discharging roller is located when the opening and closing member is located in the closed position, in accordance with the first embodiment.
FIG. 7A is a cross-sectional view of the position in which the cam surface near the discharging roller is located when the opening and closing member has rotated by 10 degrees from the closed position to an open position, in accordance with the first embodiment.
FIG. 7B is a cross-sectional view of the position in which the regulating wall near the discharging roller is located when the opening and closing member has rotated by 10 degrees from the closed position to the open position, in accordance with the first embodiment.
FIG. 8A is a cross-sectional view of the position in which the cam surface near the discharging roller is located when the opening and closing member has rotated by 20 degrees from the closed position to the open position, in accordance with the first embodiment.
FIG. 8B is a cross-sectional view of the position in which the regulating wall near the discharging roller is located when the opening and closing member has rotated by 20 degrees from the closed position to the open position, in accordance with the first embodiment.
FIG. 9A is a cross-sectional view of the position in which the cam surface near the discharging roller is located when the opening and closing member has rotated by 40 degrees from the closed position to the open position, in accordance with the first embodiment.
FIG. 9B is a cross-sectional view of the position in which the regulating wall near the discharging roller is located when the opening and closing member has rotated by 40 degrees from the closed position to the open position, in accordance with the first embodiment.
FIG. 10 is a cross-sectional view of the position in which the cam surface near the discharging roller is located when the opening and closing member is located near the closed position, in accordance with the first embodiment.
FIG. 11 is a cross-sectional view of the position in which the cam surface near the discharging roller is located when an opening and closing member according to a first modification of the first embodiment is located in the closed position.
FIG. 12 is a cross-sectional view of the position in which the cam surface near the discharging roller is located when the opening and closing member according to the first modification of the first embodiment is located in the closed position.
FIG. 13 is a perspective view of an opening and closing member according to a second embodiment.
FIG. 14 illustrates the opening and closing member and a regulating member according to the second embodiment, as viewed from the direction of a rotational axis of the discharging roller.
FIG. 15A is a cross-sectional view of a position in which a cam surface near the discharging roller is located when the opening and closing member is located in the closed position, in accordance with the second embodiment.
FIG. 15B is a cross-sectional view of a position in which a regulating wall near the discharging roller is located when the opening and closing member is located in the closed position, in accordance with the second embodiment.
FIG. 16A is a cross-sectional view of the position in which the cam surface near the discharging roller is located when the opening and closing member has rotated by 5 degrees from the closed position to the open position, in accordance with the second embodiment.
FIG. 16B is a cross-sectional view of the position in which the regulating wall near the discharging roller is located when the opening and closing member has rotated by 5 degrees from the closed position to the open position, in accordance with the second embodiment.
FIG. 17A is a cross-sectional view of the position in which the cam surface near the discharging roller is located when the opening and closing member has rotated by 20 degrees from the closed position to the open position, in accordance with the second embodiment.
FIG. 17B is a cross-sectional view of the position in which the regulating wall near the discharging roller is located when the opening and closing member has rotated by 20 degrees from the closed position to the open position, in accordance with the second embodiment.
FIG. 18A is a cross-sectional view of the position in which the cam surface near the discharging roller is located when the opening and closing member has rotated by 40 degrees from the closed position to the open position, in accordance with the second embodiment.
FIG. 18B is a cross-sectional view of the position in which the regulating wall near the discharging roller is located when the opening and closing member has rotated by 40 degrees from the closed position to the open position, in accordance with the second embodiment.
FIG. 19 is a cross-sectional view of an opening and closing member and a regulating wall according to a modification of the second embodiment.

### DESCRIPTION OF THE EMBODIMENTS

### First Embodiment

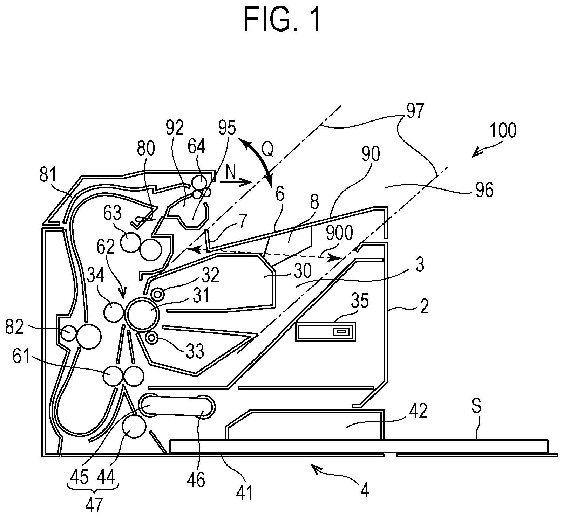

An image forming apparatus 100 according to the first embodiment will be described below. The configuration of the image forming apparatus 100 of an electrophotographic type will be described with reference to FIG. 1. FIG. 1 is a cross-sectional view illustrating the overall configuration of the image forming apparatus 100.

### 1. Image Forming Apparatus

As shown in FIG. 1, the image forming apparatus 100 has a process cartridge 30 and an apparatus main body 2 to and from which the process cartridge 30 is attachable and detachable through an attachment-detachment region 96 (i.e., a region between single-dot chain lines 97). The process cartridge 30 has a photosensitive drum 31 that carries a toner image, a charging roller 32 that uniformly electrostatically charges the surface of the photosensitive drum 31, and a developing member 33 that supplies toner onto the photosensitive drum 31.

An image forming unit 3 for forming a toner image onto a sheet S includes the process cartridge 30, a transfer roller 34 that transfers the toner image formed on the photosensitive drum 31 onto the sheet S, and a laser scanner 35 that radiates laser light onto the photosensitive drum 31.

An image forming process performed in the image forming unit 3 will be described. The surface of the photosensitive drum 31 is electrostatically charged uniformly by the charging roller 32. Then, based on an image signal from a host computer (not shown), the laser scanner 35 radiates laser light onto the photosensitive drum 31 having the electrostatically-charged surface, thereby forming an electrostatic latent image on the surface of the photosensitive drum 31. Subsequently, a toner image is formed on the photosensitive drum 31 by using toner supplied from the developing member 33.

A sheet feeding device 4 is provided at a lower section of the image forming apparatus 100. The sheet feeding device 4 has a container 41 in which sheets S are contained and a regulating plate 42 that regulates the sheets S contained in the container 41 in the width direction thereof. Furthermore, a pair of separation rollers 47 constituted of a contact roller 44 and a driving roller 45 is provided. Moreover, a pickup roller 46 pivotable about the driving roller 45 is also provided.

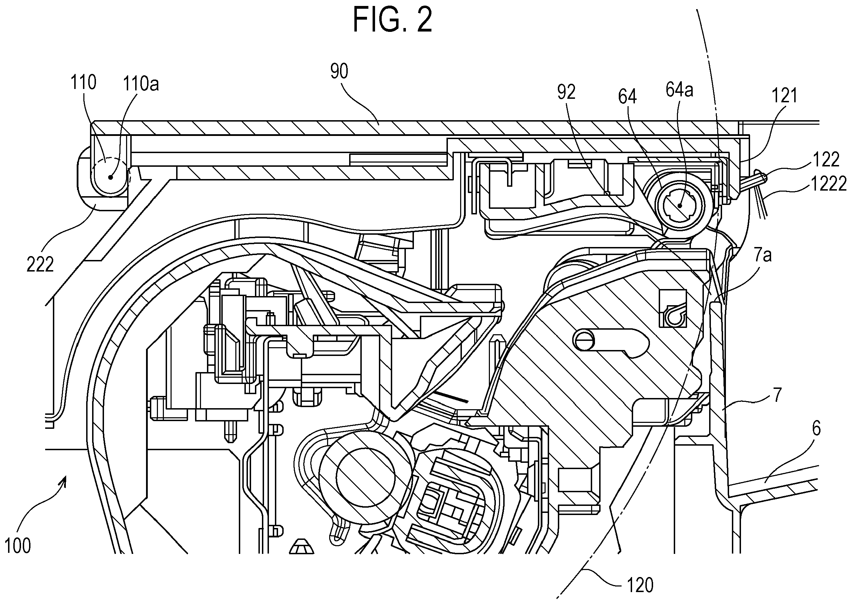

As a result of the pickup roller 46 pivoting to come into contact with a sheet S based on a print signal, the sheet S is conveyed toward the pair of separation rollers 47. Then, a conveying roller 61 conveys the sheet S to a transfer unit 62, constituted of the photosensitive drum 31 and the transfer roller 34, in which a toner image is transferred onto the sheet S. The sheet S having the toner image transferred thereon undergoes a toner-image fixing process at a fixing unit 63, and is sequentially discharged by a discharging roller (discharging member) 64 onto a sheet stacking surface 6 at the upper surface of the apparatus main body 2. The discharging roller 64 is configured to rotate around a second rotational axis 64a (FIG. 2).

The following description relates to a case of duplex printing. A fixation discharge sensor 80 is provided between the fixing unit 63 and the discharging roller 64. Moreover, a duplex conveying path 81 connecting the discharging roller 64 and the conveying roller 61, a pair of duplex conveying rollers 82 provided at an intermediate section of the duplex conveying path 81, and a shutter member (not shown) provided in the pair of duplex conveying rollers 82 are also provided.

When a predetermined time period elapses after the trailing edge of the sheet S conveyed by the discharging roller 64 is detected by the fixation discharge sensor 80, a drive switching unit (not shown) causes the discharging roller 64 to rotate in a direction opposite to the direction in which the sheet S is discharged onto the sheet stacking surface 6. Consequently, the sheet S is conveyed along the duplex conveying path 81. Subsequently, when the sheet S passes through the pair of duplex conveying rollers 82, the sheet S undergoes a skew correcting process by having its leading edge brought into abutment with the shutter member (not shown) and then nipped by the pair of duplex conveying rollers 82, so that the skew of the sheet S is corrected. The sheet S subsequently reaches the conveying roller 61. The subsequent process is the same as that for the first face of the sheet S and therefore will not be described again.

The apparatus main body 2 has a frame 222 (FIG. 2) with an opening portion 900 through which the process cartridge 30 passes during the attachment and detachment processes of the process cartridge 30, and also has an opening and closing member 90 configured to be rotatable between a closed position in which the opening and closing member 90 covers the opening portion 900 and an open position in which the opening and closing member 90 exposes the opening portion 900. The opening and closing member 90 has the sheet stacking surface 6 onto which a sheet discharged by the discharging roller 64 is stacked, and also has a regulating wall 7 configured to regulate the position of the trailing edge of the sheet stacked on the sheet stacking surface 6. The opening and closing member 90 further has a pressing portion (pressing member) 8 that presses against the process cartridge 30.

The discharging roller 64 is disposed at the lowest position possible in the height direction for reducing the size of the apparatus main body 2. In a discharging direction N of the discharging roller 64, the discharging roller 64 is disposed toward the downstream side for ensuring a distance X (not shown) used for inverting the sheet S.

### 2. Configuration of Opening And Closing Member

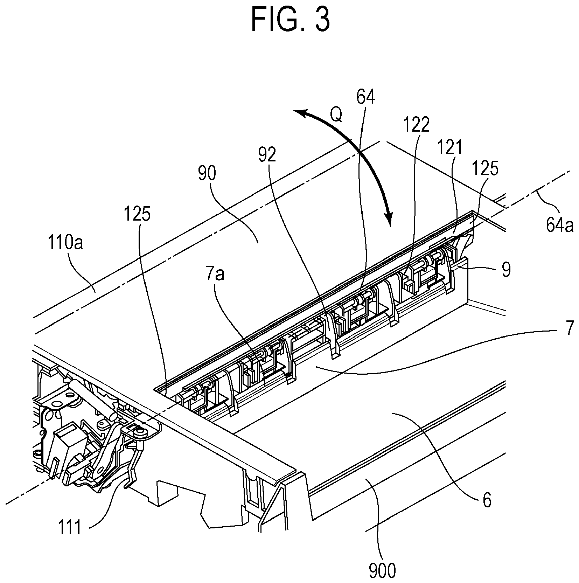

A detailed configuration of the opening and closing member 90 will be described with reference to FIGS. 2 to 9B. FIG. 2 is an enlarged cross-sectional view of the discharging roller 64 and the vicinity thereof in the image forming apparatus 100, taken in a direction orthogonal to the second rotational axis 64a when the opening and closing member 90 is located in the closed position. The opening and closing member 90 has a supported portion 110 supported in a rotatable manner around a first rotational axis in the direction of an arrow Q (FIGS. 1 and 3) 110a relative to the frame 222 of the apparatus main body 2. As shown in FIG. 2, the direction of the first rotational axis 110a is the direction extending along the second rotational axis 64a of the discharging roller 64.

As shown in FIGS. 2 and 3, the opening and closing member 90 has the sheet stacking surface 6 onto which a sheet (recording medium) discharged by the discharging roller 64 is stacked, and also has the regulating wall 7 configured to regulate the position of the trailing edge of the sheet stacked on the sheet stacking surface 6. The opening and closing member 90 is configured to be rotatable between the closed position, indicated with a dashed line in FIG. 1, in which the opening and closing member 90 covers the opening portion 900 and the open position in which the opening and closing member 90 exposes the opening portion 900. As shown in FIG. 2, the regulating wall 7 extends from the sheet stacking surface 6 toward the discharging roller 64 in the direction intersecting the sheet stacking surface 6 when the opening and closing member 90 is located in the closed position. The end portion of the regulating wall 7 at the far side from the sheet stacking surface 6 is defined as an end portion 7a.

A dashed line 120 in FIG. 2 is an imaginary circle that is centered on the first rotational axis 110a when the opening and closing member 90 is closed and in which the distance between the first rotational axis 110a and the end portion 7a of the regulating wall 7 is defined as the radius. In FIG. 2, an outer cover 121 and a protrusion 122 are located outside the dashed line 120. The protrusion 122 supports a charge removing member 1222 that comes into contact with a sheet S discharged by the discharging roller 64 to remove electrostatic charge from the sheet S.

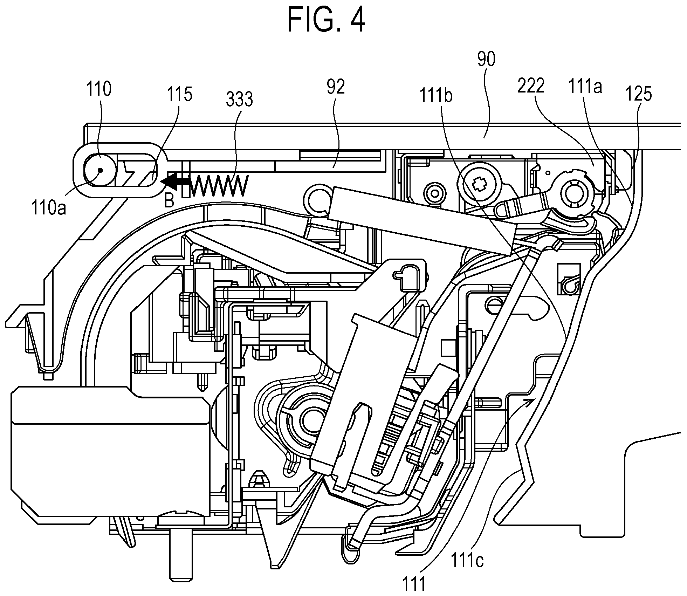

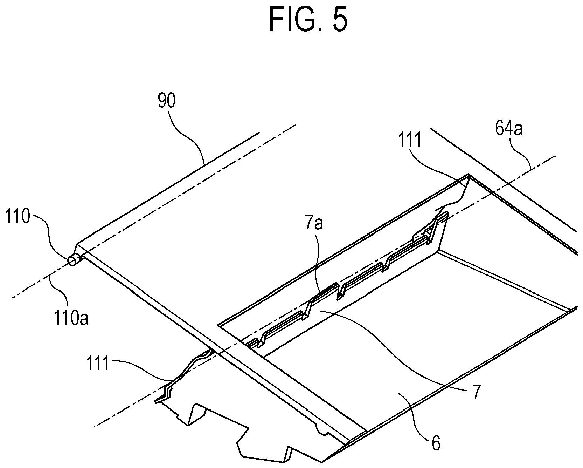

FIG. 3 is an enlarged perspective view of the discharging roller 64 and the vicinity thereof in the image forming apparatus 100 when the opening and closing member 90 is located in the closed position. FIG. 4 is an enlarged cross-sectional view of the discharging roller 64 and the vicinity thereof in the image forming apparatus 100 when the opening and closing member 90 is located in the closed position. The cross section in FIG. 4 is orthogonal to the second rotational axis 64a in a region outside the regulating wall 7 in the direction of the second rotational axis 64a in the image forming apparatus 100. FIG. 5 is a perspective view of the opening and closing member 90.

As shown in FIG. 3, the end portion 7a of the regulating wall 7 is comb-teeth-shaped. As shown in FIG. 4, the supported portion 110 of the opening and closing member 90 is fitted in a long hole 115 provided in a cover 92. As shown in FIGS. 3, 4, and 5, the opening and closing member 90 has cam surfaces 111 at opposite end portions located outside the regulating wall 7 with respect to the direction of the first rotational axis 110a. As shown in FIG. 4, the cam surfaces 111 face the frame 222 and each have a first region 11 1a, a second region 111b, and a third region 11 1c. The second region 111b of each cam surface 111 is positionally closer to the first rotational axis 110a than the first region 111a, and is provided upstream of the first region 111a in the direction in which the opening and closing member 90 rotates from the closed position toward the open position. The third region 111c is positionally farther from the first rotational axis 110a than the second region 1 1 1b, and is provided upstream of the second region 111b in the direction in which the opening and closing member 90 rotates from the closed position toward the open position.

The cover 92 of the image forming apparatus 100 is provided with the long hole 115 into which the supported portion 110 is fitted and a compression spring 333 that biases the supported portion 110 in the direction of an arrow B. The frame 222 has a contact portion 125 configured to come into contact with the cam surfaces 111 while the opening and closing member 90 rotates.

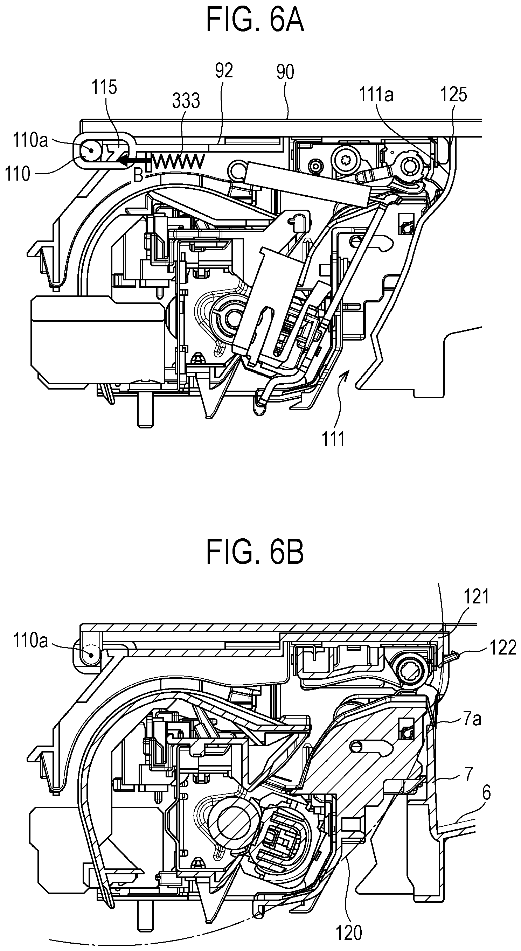

Next, the position of the end portion 7a of the regulating wall 7 when the opening and closing member 90 rotates around the first rotational axis 110a from the closed position to the open position will be described with reference to FIGS. 6A, 6B, 7A, 7B, 8A, 8B, 9A, and 9B.

FIGS. 6A and 6B are cross-sectional views of the discharging roller 64 and the vicinity thereof in the image forming apparatus 100, taken in a direction orthogonal to the first rotational axis 110a when the opening and closing member 90 is located in the closed position. Specifically, FIG. 6A is a cross-sectional view of a region in which a cam surface 111 is located with respect to the direction of the first rotational axis 110a, and FIG. 6B is a cross-sectional view of a region in which the regulating wall 7 is located with respect to the direction of the first rotational axis 110a. In FIGS. 6A and 6B, the supported portion 110 of the opening and closing member 90 is biased in the direction of the arrow B by the spring 333 so as to be located at a far end portion (first position) of the long hole 115 with respect to the sheet stacking surface 6. The first region 111a of the cam surface 111 of the opening and closing member 90 is in contact with the contact portion 125. A dashed line 120 in FIG. 6B is an imaginary circle that is centered on the first rotational axis 110a when the supported portion 110 is located in the first position and in which the distance between the first rotational axis 110a and the end portion 7a of the regulating wall 7 is defined as the radius. The end portion 7a of the regulating wall 7 is located where the dashed line 120 coincides with the discharging roller 64, the outer cover 121, and the protrusion 122.

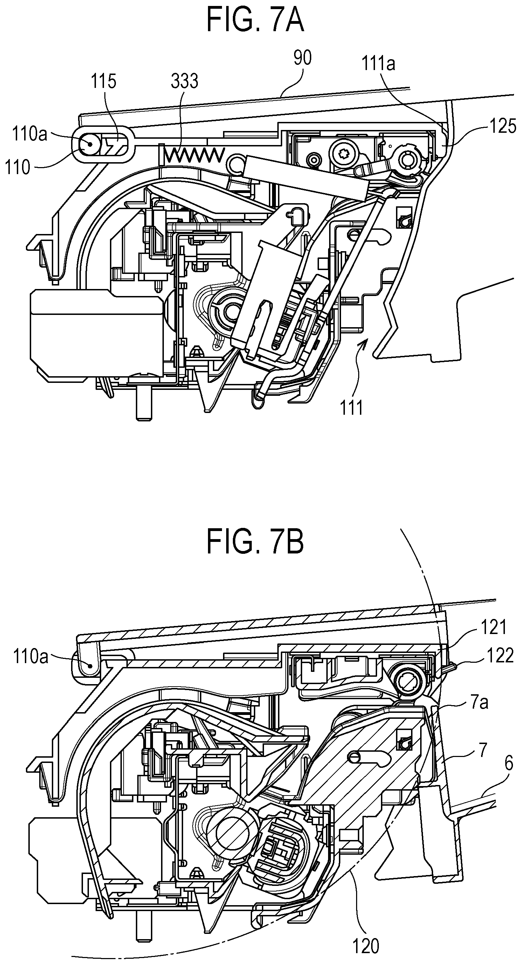

FIGS. 7A and 7B are cross-sectional views of the discharging roller 64 and the vicinity thereof in the image forming apparatus 100, taken in a direction orthogonal to the first rotational axis 110a when the opening and closing member 90 has rotated by 10 degrees from the closed position shown in FIGS. 6A and 6B. Specifically, FIG. 7A is a cross-sectional view of the region in which a cam surface 111 is located with respect to the direction of the first rotational axis 110a, and FIG. 7B is a cross-sectional view of the region in which the regulating wall 7 is located with respect to the direction of the first rotational axis 110a.

As shown in FIG. 7A, similar to FIG. 6A, the first region 111a of the cam surface 111 is in contact with the contact portion 125, and the supported portion 110 is located in the first position. As shown in FIG. 7B, similar to FIG. 6B, the dashed line 120 coincides with the discharging roller 64, the outer cover 121, and the protrusion 122. The angle of 10 degrees is the angle at which the supported portion 110 starts to move in the direction of the arrow B from the first position of the long hole 115.

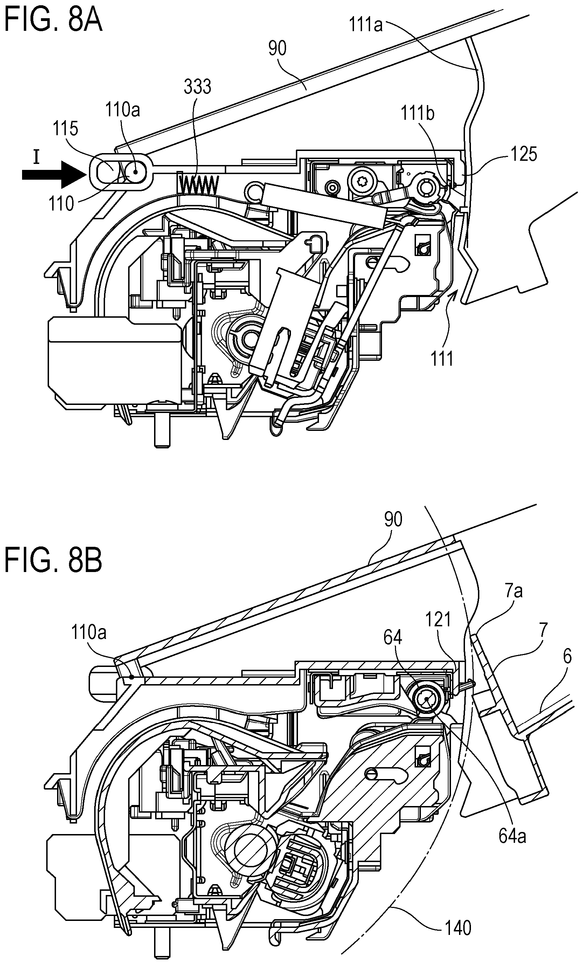

FIGS. 8A and 8B are cross-sectional views of the discharging roller 64 and the vicinity thereof in the image forming apparatus 100, taken in a direction orthogonal to the first rotational axis 110a when the opening and closing member 90 has rotated by 20 degrees from the closed position. Specifically, FIG. 8A is a cross-sectional view of the region in which a cam surface 111 is located with respect to the direction of the first rotational axis 110a, and FIG. 8B is a cross-sectional view of the region in which the regulating wall 7 is located with respect to the direction of the first rotational axis 110a.

As shown in FIG. 8A, the second region 111b of the cam surface 111 is in contact with the contact portion 125.

In the sheet discharging direction N of the discharging roller 64, the second region 111b is located closer toward the supported portion 110 than the first region 111a. Therefore, the region of the cam surface 111 coming into contact with the contact portion 125 changes from the first region 111a to the second region 111b while the opening and closing member 90 rotates by 20 degrees from the closed position. When the second region 111b of the cam surface 111 comes into contact with the contact portion 125, the second region 111b is pressed against the contact portion 125, so that the opening and closing member 90 moves against the spring force of the spring 333 in the discharging direction N (i.e., the direction of an arrow I) for the sheet S by the discharging roller 64. As a result, as shown in FIG. 8A, the supported portion 110 moves to a second position at a near end portion of the long hole 115 with respect to the sheet stacking surface 6. The second position is closer to the sheet stacking surface 6 than the first position in the discharging direction N of the discharging roller 64.

A dashed line 140 in FIG. 8B is an imaginary circle that is centered on the first rotational axis 110a when the supported portion 110 is located in the second position and in which the distance between the first rotational axis 110a and the end portion 7a of the regulating wall 7 is defined as the radius. The dashed line 140 is located outside the outer cover 121 and the protrusion 122. Therefore, when the supported portion 110 is located in the second position, the end portion 7a of the regulating wall 7 does not interfere with the outer cover 121 and the protrusion 122 even when the opening and closing member 90 is rotated around the first rotational axis 110a.

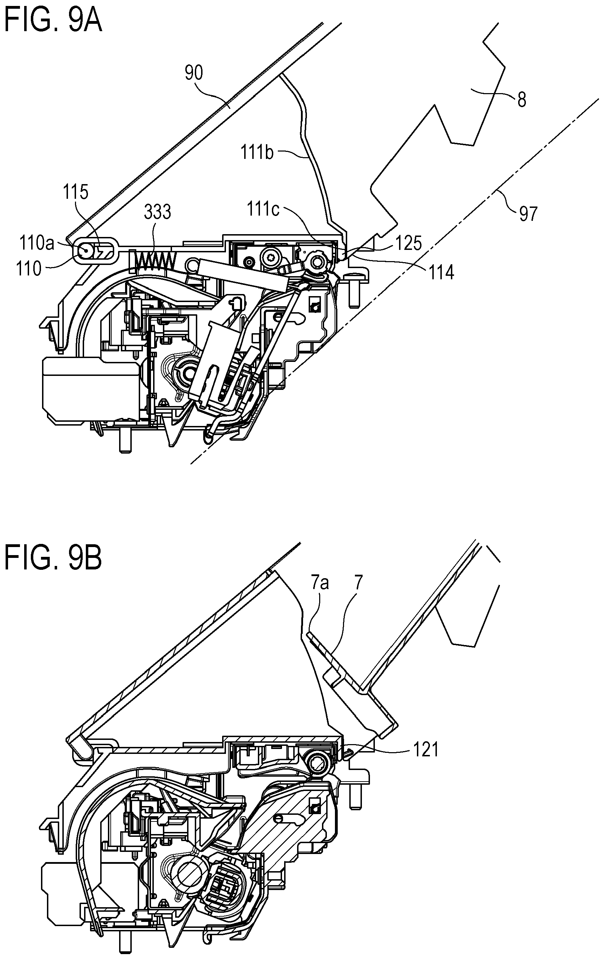

FIGS. 9A and 9B are cross-sectional views of the discharging roller 64 and the vicinity thereof in the image forming apparatus 100, taken in a direction orthogonal to the first rotational axis 110a when the opening and closing member 90 has rotated by 40 degrees from the closed position. Specifically, FIG. 9A is a cross-sectional view of the region in which a cam surface 111 is located with respect to the direction of the first rotational axis 110a, and FIG. 9B is a cross-sectional view of the region in which the regulating wall 7 is located with respect to the direction of the first rotational axis 110a.

As shown in FIG. 9A, the third region 111c of the cam surface 111 is in contact with the contact portion 125.

In the sheet discharging direction N of the discharging roller 64, the third region 111c is located farther from the supported portion 110 than the second region 111b. Therefore, the region of the cam surface 111 coming into contact with the contact portion 125 changes from the second region 111b to the third region 111c while the opening and closing member 90 rotates from 20 degrees to 40 degrees. As a result, the opening and closing member 90 moves toward the supported portion 110 (in the direction of the arrow B) in accordance with the spring force of the spring 333 until the third region 111c of the cam surface 111 comes into contact with the contact portion 125, and the supported portion 110 moves to the first position of the long hole 115, as shown in FIG. 9A.

In accordance with the configuration described above, the opening and closing member 90 can be retracted outside the region through which the process cartridge 30 passes during the attachment and detachment processes of the process cartridge 30, without increasing the height of the apparatus main body 2 or increasing the rotational angle of the opening and closing member 90.

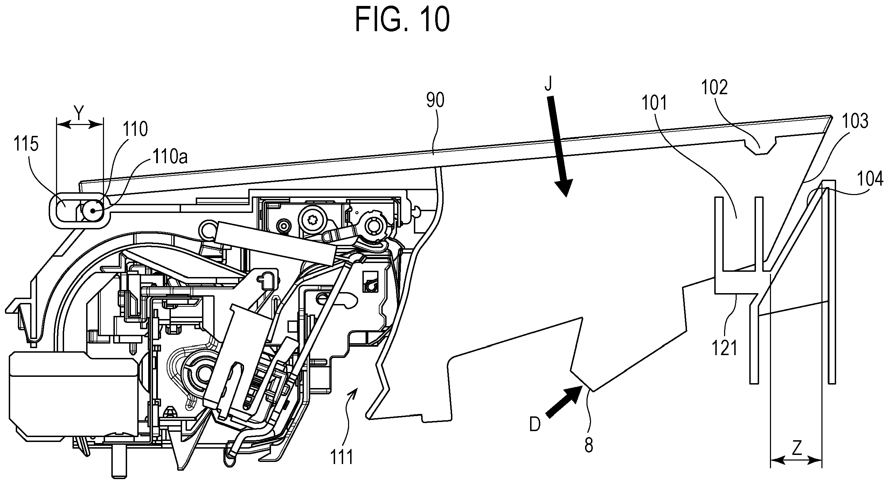

Next, FIG. 10 is a cross-sectional view of the region in which a cam surface 111 is located with respect to the direction of the first rotational axis 110a when the opening and closing member 90 is located in a position near the closed position. While the opening and closing member 90 rotates from the open position to the closed position, the opening and closing member 90 receives a reaction force in the direction of an arrow D from the pressing portion 8 that presses the process cartridge 30 toward an image formation position. The following configuration is provided for preventing the supported portion 110 of the opening and closing member 90 from moving from the first position toward the second position in the long hole 115 due to the reaction force.

The opening and closing member 90 has a regulated surface 103 and a positioning boss 102, and the apparatus main body 2 has a regulator (regulating surface) 104. The regulator 104 comes into contact with the regulated surface 103 of the opening and closing member 90 so as to regulate the movement of the supported portion 110 of the opening and closing member 90 in the direction of the arrow D when the opening and closing member 90 rotates from the open position toward the closed position in the direction of an arrow J.

By making a regulation width Z of the regulating surface 104 larger than a longitudinal length Y of the long hole 115, the opening and closing member 90 can be rotated to the closed position. Furthermore, when the opening and closing member 90 is located in the closed position, the positioning boss 102 of the opening and closing member 90 is fitted into a hole 101 in the outer cover 121, so that the opening and closing member 90 can be made positionally stable.

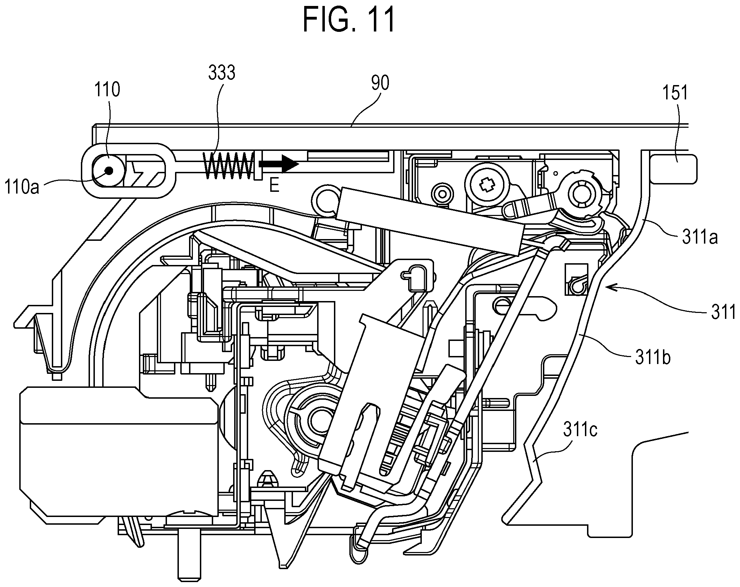

The configuration of a first modification of this embodiment will now be described with reference to FIG. 11. As shown in FIG. 11, the spring 333 is configured to apply pressure in the direction (of an arrow E) in which the supported portion 110 moves from the first position toward the second position. A contact portion 151 is provided facing cam surfaces 311 so that the cam surfaces 311 each having a first region 311a, a second region 311b, and a third region 311c are oriented outside, which is opposite to that in the above embodiment. When the opening and closing member 90 is rotated from the closed position toward the open position, the contact portion 151 comes into contact with the first region 311a, the second region 311b, and the third region 311c of each cam surface 311 in this sequence. When the second region 311b of the cam surface 311 is in contact with the contact portion 151, the distance of the second region 311b from the first rotational axis 110a is shorter than that of the first region 311a, so that the supported portion 110 is pressed and moved by the spring 333 by that amount in the direction of the arrow E. As a result, the supported portion 110 moves together with the regulating wall 7 in the direction of the arrow E, so that the opening and closing member 90 can rotate from the closed position to the open position without interference.

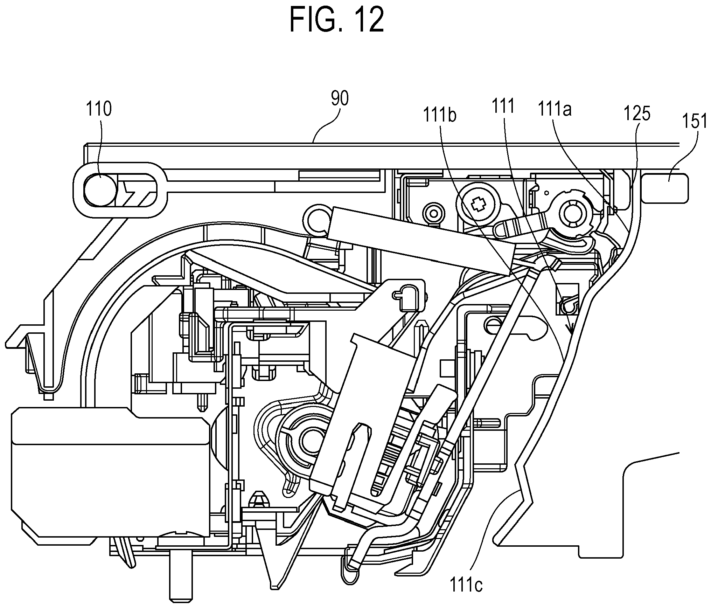

Next, a second modification of this embodiment will be described with reference to FIG. 12. As shown in FIG. 12, the cam surfaces 111 are interposed between the contact portion 125 and the contact portion 151, so that the forward and backward movement of the opening and closing member 90 is regulated during the opening-closing operation thereof, thereby achieving advantages similar to those of the first embodiment even if a spring that presses against the supported portion 110 is omitted.

As described above, this embodiment can provide an image forming apparatus in which the opening and closing member can be opened and closed in a compact fashion without posing an impediment to the attachment and detachment processes of the cartridge and also without interfering with the apparatus main body. The term "interfere" used here has a meaning in which the opening and closing member comes into contact with a part of the apparatus main body other than the opening and closing member to an extent that the opening and closing member is not openable and closable, and does not include contact to an extent that the opening and closing member is openable and closable.

### Second Embodiment

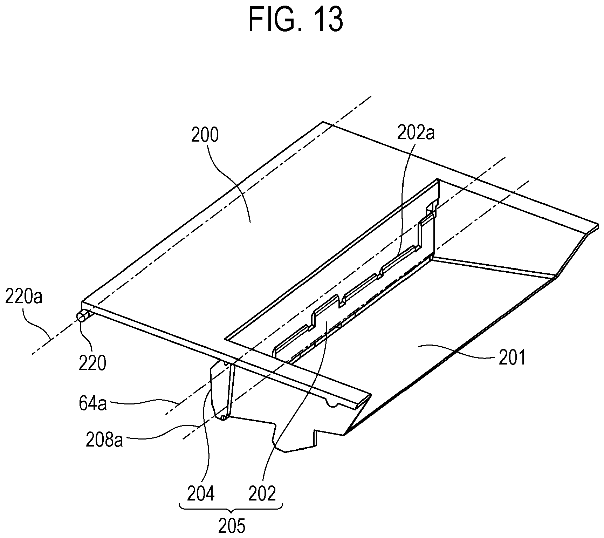

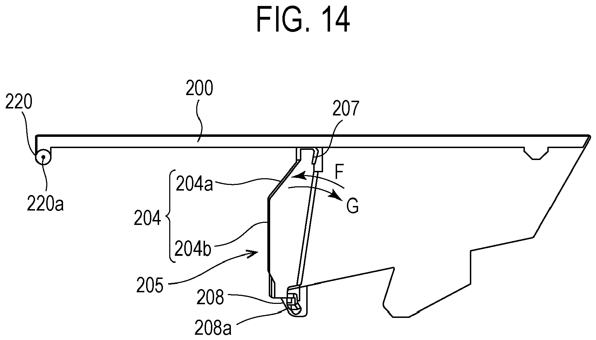

An image forming apparatus 100 according to a second embodiment will now be described with reference to FIGS. 13, 14, 15A, 15B, 16A, 16B, 17A, 17B, 18A, and 18B. Descriptions of components identical to those in the first embodiment will be omitted. FIG. 13 is a perspective view of an opening and closing member 200. FIG. 14 illustrates the opening and closing member 200, as viewed from the direction of the second rotational axis 64a of the discharging roller 64.

The opening and closing member 200 has a stacking surface 201 and a supported portion 220. The supported portion 220 is supported so that the opening and closing member 200 is rotatable around a first rotational axis 220a relative to the frame 222 (see FIG. 2). The direction of the first rotational axis 220a is the direction extending along the second rotational axis 64a of the discharging roller 64. The opening and closing member 200 is configured to be rotatable around the first rotational axis 220a between a closed position in which the opening and closing member 200 covers the opening portion 900 shown in FIG. 1 and an open position in which the opening and closing member 200 exposes the opening portion 900.

The second embodiment differs from the first embodiment with respect to the following points. In contrast to the first embodiment in which the regulating wall 7 is fixed to the opening and closing member 90, a regulating member (regulating wall) 205 corresponding to the regulating wall 7 in the first embodiment is provided in a pivotable manner relative to the opening and closing member 200 in the second embodiment. The regulating member 205 has a pivotable supporter 208 supported by the opening and closing member 200 in a pivotable manner around a pivot axis 208a relative to the opening and closing member 200. The pivot axis 208a extends along the first rotational axis 220a. The regulating member 205 has a regulating surface (regulating wall) 202 that regulates the trailing edge of a sheet S stacked on the stacking surface 201, and also has cam surfaces 204 at opposite end portions located outside the regulating surface 202 in the direction of the pivot axis 208a. The end portion of the regulating surface 202 at the far side from the stacking surface 201 in the direction intersecting the stacking surface 201 is defined as an end portion 202a.

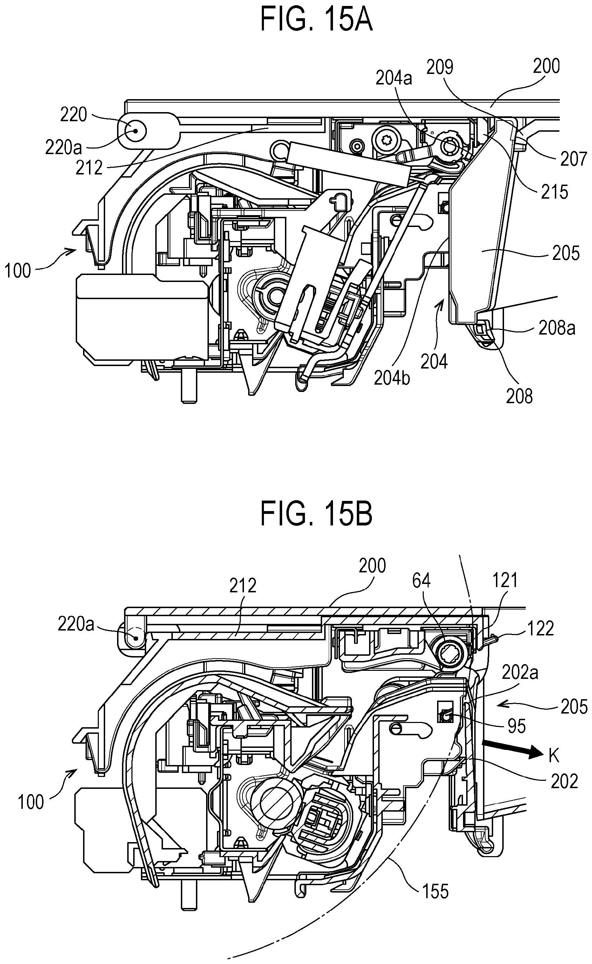

As shown in FIG. 14, the regulating member 205 is provided with the pivotable supporter 208 at the end portion on the side of the stacking surface 201 of the regulating member 205 in the direction intersecting the stacking surface 201, and is also provided with a stopper 207 at the end portion of the regulating member 205 on the opposite side from the pivotable supporter 208. The stopper 207 is provided for regulating pivoting of the regulating member 205 in the direction of an arrow G. Specifically, the stopper 207 has the following function when the opening and closing member 200 is located in the closed position. When the regulating member 205 tends to pivot in the direction in which the distance between the end portion 202a of the regulating surface 202 and the supported portion 220 (i.e., the first rotational axis 220a) of the opening and closing member 200 increases, the stopper 207 restricts pivoting of the regulating member 205 by contacting an abutment section 209 (FIG. 15A). The stopper 207 is provided at an end portion in the direction of the pivot axis 208a. Alternatively, a biasing member (not shown) that biases the regulating member 205 in the direction of an arrow F may be provided in place of the stopper 207.

The cam surfaces 204 face the frame 222 (see FIG. 2) and each have a first region 204a and a second region 204b. The second region 204b of each cam surface 204 is positionally closer to the first rotational axis 220a than the first region 204a, and is provided upstream of the first region 204a in the direction in which the opening and closing member 200 rotates from the closed position toward the open position. The first region 204a of the cam surface 204 is configured so that the distance to the first rotational axis 220a decreases toward the upstream side in the direction in which the opening and closing member 200 rotates from the closed position toward the open position.

Next, the position of the regulating member 205 when the opening and closing member 200 is rotated will be described with reference to FIGS. 15A, 15B, 16A, 16B, 17A, 17B, 18A, and 18B.

FIGS. 15A and 15B are enlarged cross-sectional views of the discharging roller 64 and the vicinity thereof in the image forming apparatus 100 when the opening and closing member 200 is located in the closed position, taken in a direction orthogonal to the first rotational axis 220a. Specifically, FIG. 15A is a cross-sectional view of the image forming apparatus 100 in a region in which a cam surface 204 is located with respect to the direction of the first rotational axis 220a, and FIG. 15B is a cross-sectional view of the image forming apparatus 100 in a region in which the regulating surface 202 is located with respect to the direction of the first rotational axis 220a.

As shown in FIG. 15A, the first region 204a of the cam surface 204 is in contact with a contact portion 215. The stopper 207 is in abutment with (i.e., engaged with) the abutment section 209 provided in an inner cover 212. The regulating member 205 is interposed between the contact portion 215 and the abutment section 209, so that pivoting of the regulating member 205 in any direction around the pivot axis 208a is restricted.

During an image forming process, movement of a discharging guide 95 shown in FIG. 15B is regulated in the direction of an arrow K by the regulating member 205. When the opening and closing member 200 is located in the closed position, the regulating member 205 is prevented from rotating relative to the opening and closing member 200, thereby preventing a user from accessing the fixing unit 63 located within the regulating member 205.

A dashed line 155 serving as an imaginary circle that is centered on the first rotational axis 220a and in which the distance between the first rotational axis 220a and the end portion 202a of the regulating surface 202 is defined as the radius is located within the outer cover 121 and the protrusion 122.

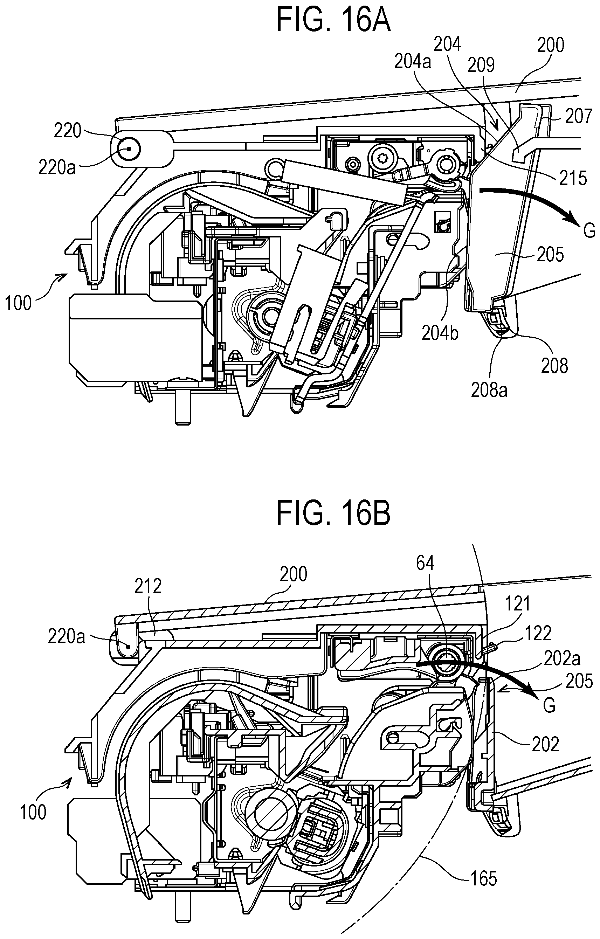

FIGS. 16A and 16B are cross-sectional views when the opening and closing member 200 has rotated by 5 degrees around the first rotational axis 220a from the closed position to the open position. Specifically, FIG. 16A is a cross-sectional view of the image forming apparatus 100 in the region in which a cam surface 204 is located with respect to the direction of the first rotational axis 220a, and FIG. 16B is a cross-sectional view of the image forming apparatus 100 in the region in which the regulating surface 202 is located with respect to the direction of the first rotational axis 220a.

While the opening and closing member 200 rotates by 5 degrees from the closed position, the stopper 207 and the abutment section 209 disengage from each other, and the regulating member 205 is pressed by the contact portion 215 and thus rotates around the pivot axis 208a in the direction of the arrow G. As shown in FIG. 16A, the regulating member 205 rotates while the first region 204a of the cam surface 204 and the contact portion 215 are in contact with each other. In this case, a dashed line 165 serving as an imaginary circle that is centered on the first rotational axis 220a and in which the distance between the first rotational axis 220a and an end portion 202a of the regulating surface 202 is defined as the radius is located within the outer cover 121 and the protrusion 122.

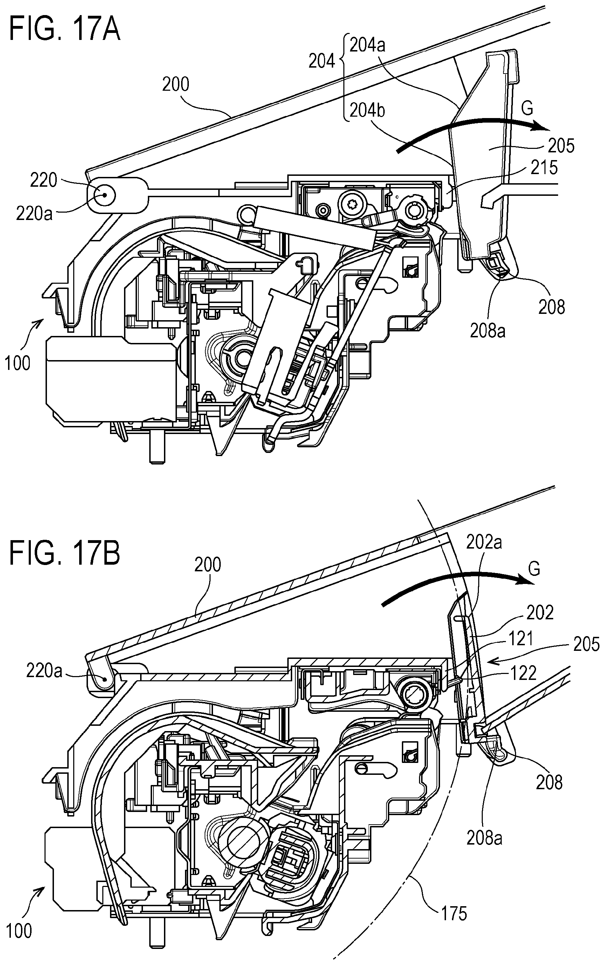

FIGS. 17A and 17B are cross-sectional views when the opening and closing member 200 has rotated by 20 degrees around the first rotational axis 220a from the closed position to the open position. Specifically, FIG. 17A is a cross-sectional view of the image forming apparatus 100 in the region in which a cam surface 204 is located with respect to the direction of the first rotational axis 220a, and FIG. 17B is a cross-sectional view of the image forming apparatus 100 in the region in which the regulating surface 202 is located with respect to the direction of the first rotational axis 220a. As shown in FIG. 17A, the second region 204b of the cam surface 204 is in contact with the contact portion 215. While the opening and closing member 200 rotates from the 5-degree position to the 20-degree position, the region coming into contact with the contact portion 215 changes from the first region 204a to the second region 204b, so that the regulating member 205 is pressed by the contact portion 215 and rotates around the pivot axis 208a in the direction of the arrow G. In this case, a dashed line 175 serving as an imaginary circle that is centered on the first rotational axis 220a and in which the distance between the first rotational axis 220a and the end portion 202a of the regulating surface 202 is defined as the radius is located outside the outer cover 121 and the protrusion 122. Specifically, the regulating member 205 pivots relative to the opening and closing member 200, so that the end portion 202a of the regulating surface 202 of the regulating member 205 can cause the opening and closing member 200 to rotate without interfering with the outer cover 121 and the protrusion 122.

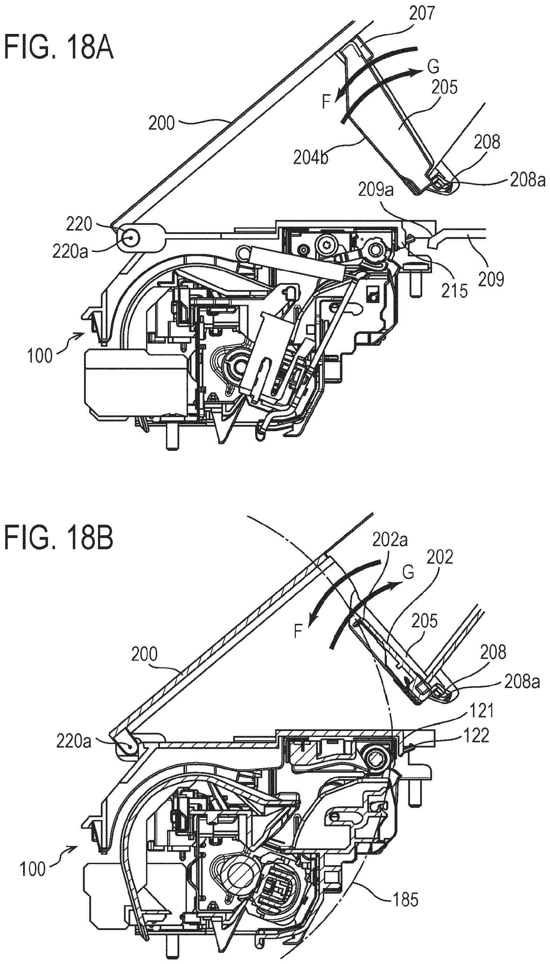

FIGS. 18A and 18B are cross-sectional views when the opening and closing member 200 has rotated by 40 degrees around the first rotational axis 220a from the closed position to the open position. Specifically, FIG. 18A is a cross-sectional view of the image forming apparatus 100 in the region in which a cam surface 204 is located with respect to the direction of the first rotational axis 220a, and FIG. 18B is a cross-sectional view of the image forming apparatus 100 in the region in which the regulating surface 202 is located with respect to the direction of the first rotational axis 220a. As shown in FIG. 18A, the opening and closing member 200 has rotated to a position in which the second region 204b of the cam surface 204 has passed the contact portion 215. Thus, the regulating member 205 rotates around the pivot axis 208a in the direction of the arrow F due to its own weight. In this case, a dashed line 185 serving as an imaginary circle that is centered on the first rotational axis 220a and in which the distance between the first rotational axis 220a and the end portion 202a of the regulating surface 202 is defined as the radius is located within the outer cover 121 and the protrusion 122. Specifically, assuming that the opening and closing member 200 rotates from this position toward the closed position without the regulating member 205 pivoting in the direction of the arrow G, the end portion 202a of the regulating surface 202 would interfere with the outer cover 121 and the protrusion 122 shown in FIG. 18B. In this configuration, when the opening and closing member 200 rotates from this position toward the closed position, the regulating member 205 rotates in the direction of the arrow G as a result of the stopper 207 coming into contact with a tapered section 209a of the abutment section 209. As a result, the opening and closing member 200 can move to the closed position shown in FIGS. 15A and 15B without the end portion 202a of the regulating surface 202 interfering with the outer cover 121 and the protrusion 122.

As described above, this embodiment can provide an image forming apparatus in which the opening and closing member can be opened and closed in a compact fashion without posing an impediment to the attachment and detachment processes of the cartridge and also without interfering with the apparatus main body. The term "interfere" used here has a meaning in which the opening and closing member comes into contact with a part of the apparatus main body other than the opening and closing member to an extent that the opening and closing member is not openable and closable, and does not include contact to an extent that the opening and closing member is openable and closable. Furthermore, without causing the supported portion 220 of the opening and closing member 200 to move, the opening and closing member 200 is openable and closable without interference in this embodiment, thereby achieving usability superior to that in the first embodiment. Moreover, because a rib 240 provided at the end portion on the side of the stacking surface 201of the regulating surface 202 extends to a position below the stacking surface 201 in the gravitational direction, a gap is less likely be formed between the stacking surface 201 and the regulating surface 202. Therefore, even if there is a foreign object on the stacking surface 201, the foreign object is less likely to fall into the apparatus main body 2. Furthermore, the photosensitive drum 31 shown in FIG. 1 can be prevented from being exposed to light via the opening and closing member 200.

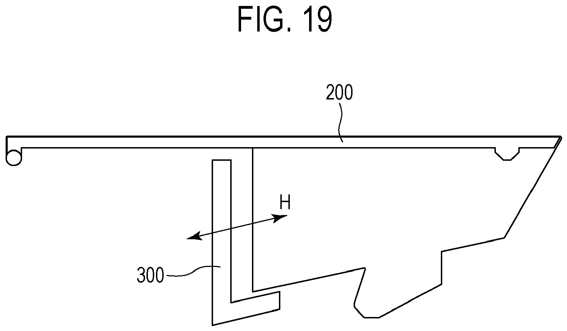

In the above description, the regulating member 205 is configured to rotate to the opening and closing member 200. Alternatively, the regulating member 205 may cause a regulating wall 300 to move parallel to the opening and closing member 200 in the direction of an arrow H by using a cam (not shown) when the opening and closing member 200 opens, as shown in FIG. 19. Furthermore, as an alternative to this embodiment in which the regulating member moves as a result of the cam provided in the regulating member being pressed by the contact portion of the apparatus main body, the regulating member may be moved in conjunction with the opening-closing operation of the opening and closing member by using an electric actuator.

While the present invention has been described with reference to exemplary embodiments, it is to be understood that the invention is not limited to the disclosed exemplary embodiments.

## Claims

1. An image forming apparatus comprising:
a cartridge (30); and
an apparatus main body (2) to which the cartridge (30) is detachably attached, the apparatus main body (2) including:
a frame (222) in which an opening portion (900), through which the cartridge (30) is attached to the apparatus main body (2), is formed;
an opening and closing member (200) configured to move between an open position in which the opening and closing member (200) is opened to expose the opening portion (900) and a closed position in which the opening and closing member (200) is closed to cover the opening portion (900), the opening and closing member (200) having a supported portion (220) supported by the frame (222) so that the opening and closing member (200) is rotatable about a rotational axis (220a), the opening and closing member (200) having a stacking surface (201) on which a sheet is to be stacked when the opening and closing member (200) is located in the closed position;
a discharging roller (64) configured to discharge the sheet in a discharging direction (N) onto the stacking surface (201) when the opening and closing member (200) is located in the closed position; and
a regulating wall (205) configured to regulate a position of an upstream edge, in the discharging direction (N), of the sheet stacked on the stacking surface (201), the regulating wall (205) extending from the stacking surface (201) toward the discharging roller (64) in a direction intersecting the discharging direction (N),
**characterized in that** the regulating wall (205) is movably attached to the opening and closing member (200).

2. The image forming apparatus according to Claim 1,
wherein the regulating wall (205) is attached to the opening and closing member (90) so that the regulating wall (205) pivots about a pivot axis (208a) relative to the opening and closing member (200), the pivot axis (208a) extending in a direction of the rotational axis and being disposed at an end portion of the regulating wall (205) on a side of the stacking surface (201) in the intersecting direction, and
wherein, while the opening and closing member (200) is rotated from the closed position toward the open position, the regulating wall (205) is pivoted by contacting a part (215) of the apparatus main body which is configured not to move together with the opening and closing member (200).

3. The image forming apparatus according to Claim 2,
wherein, when the end portion of the regulating wall is defined as a first end portion, the regulating wall has a second end portion opposite to the first end portion in the intersecting direction, and
wherein the apparatus main body (2) has a stopper (207) configured to stop the regulating wall (205) from pivoting around the pivot axis (208a) by contacting the second end portion (204a) of the regulating wall when the opening and closing member (200) is located in the closed position.

4. The image forming apparatus according to Claim 1, wherein the supported portion (220) is arranged upstream of the discharging roller (64) in the discharging direction (N).

5. The image forming apparatus according to Claim 1, wherein the regulating wall (205) pivots, relative to the opening and closing member (200), about a pivot axis (208a) extending in a direction of the rotational axis when the opening and closing member (200) is rotated from the closed position to the open position.

6. The image forming apparatus according to Claim 2, wherein contact between the regulating wall (205) and the part (215) of the apparatus main body causes the regulating wall (205) to pivot in a pivot direction opposite to a rotational direction of the opening and closing member (200) while the opening and closing member (200) is being rotated from the closed position to the open position.

## Patentansprüche

1. Bilderzeugungsvorrichtung, umfassend:
eine Kartusche (30); und
einen Vorrichtungshauptkörper (2), an dem die Kartusche (30) abnehmbar angebracht ist, wobei der Vorrichtungshauptkörper (2) enthält:
einen Rahmen (222), in dem ein Öffnungsabschnitt (900) ausgebildet ist, durch den die Kartusche (30) am Vorrichtungshauptkörper (2) angebracht ist;
ein Öffnungs- und Schließelement (200), das konfiguriert ist, sich zwischen einer offenen Position, in der das Öffnungs- und Schließelement (200) geöffnet ist, um den Öffnungsabschnitt (900) freizulegen, und einer geschlossenen Position zu bewegen, in der das Öffnungs- und Schließelement (200) geschlossen ist, um den Öffnungsabschnitt (900) abzudecken, wobei das Öffnungs- und Schließelement (200) einen gehaltenen Abschnitt (220) aufweist, der vom Rahmen (222) gehalten wird, so dass das Öffnungs- und Schließelement (200) um eine Drehachse (220a) drehbar ist, wobei das Öffnungs- und Schließelement (200) eine Stapelfläche (201) aufweist, auf der ein Bogen gestapelt werden soll, wenn sich das Öffnungs- und Schließelement (200) in der geschlossenen Position befindet;
eine Ausgabewalze (64), die konfiguriert ist, den Bogen in einer Ausgaberichtung (N) auf die Stapelfläche (201) auszugeben, wenn sich das Öffnungs- und Schließelement (200) in der geschlossenen Position befindet; und
eine Regulierwand (205), die konfiguriert ist, eine Position einer stromaufwärtigen Kante des auf der Stapelfläche (201) gestapelten Bogens in der Ausgaberichtung (N) zu regulieren, wobei sich die Regulierwand (205) von der Stapelfläche (201) zur Ausgabewalze (64) in einer Richtung erstreckt, die die Ausgaberichtung (N) schneidet,
**dadurch gekennzeichnet, dass** die Regulierwand (205) beweglich am Öffnungs- und Schließelement (200) angebracht ist.

2. Bilderzeugungsvorrichtung nach Anspruch 1,
wobei die Regulierwand (205) am Öffnungs- und Schließelement (90) angebracht ist, so dass die Regulierwand (205) um eine Schwenkachse (208a) relativ zum Öffnungs- und Schließelement (200) schwenkt, wobei sich die Schwenkachse (208a) in einer Richtung der Drehachse erstreckt und an einem Endabschnitt der Regulierwand (205) auf einer Seite der Stapelfläche (201) in der schneidenden Richtung angeordnet ist, und
wobei, während das Öffnungs- und Schließelement (200) von der geschlossenen Position zur offenen Position gedreht wird, die Regulierwand (205) geschwenkt wird, indem sie einen Teil (215) des Vorrichtungshauptkörpers berührt, der konfiguriert ist, sich nicht zusammen mit dem Öffnungs- und Schließelement (200) zu bewegen.

3. Bilderzeugungsvorrichtung nach Anspruch 2,
wobei, wenn der Endabschnitt der Regulierwand als ein erster Endabschnitt definiert ist, die Regulierwand einen zweiten Endabschnitt aufweist, der dem ersten Endabschnitt in der schneidenden Richtung gegenüberliegt, und
wobei der Vorrichtungshauptkörper (2) einen Anschlag (207) aufweist, der konfiguriert ist, die Regulierwand (205) daran zu hindern, um die Schwenkachse (208a) zu schwenken, indem er den zweiten Endabschnitt (204a) der Regulierwand berührt, wenn sich das Öffnungs- und Schließelement (200) in der geschlossenen Position befindet.

4. Bilderzeugungsvorrichtung nach Anspruch 1, wobei der gehaltene Abschnitt (220) stromaufwärts der Ausgabewalze (64) in der Ausgaberichtung (N) angeordnet ist.

5. Bilderzeugungsvorrichtung nach Anspruch 1, wobei die Regulierwand (205) relativ zum Öffnungs- und Schließelement (200) um eine Schwenkachse (208a) schwenkt, die sich in einer Richtung der Drehachse erstreckt, wenn das Öffnungs- und Schließelement (200) von der geschlossenen Position zur offenen Position gedreht wird.

6. Bilderzeugungsvorrichtung nach Anspruch 2, wobei Kontakt zwischen der Regulierwand (205) und dem Teil (215) des Vorrichtungshauptkörpers bewirkt, dass die Regulierwand (205) in einer Schwenkrichtung entgegengesetzt zu einer Drehrichtung des Öffnungs- und Schließelements (200) schwenkt, während das Öffnungs- und Schließelement (200) von der geschlossenen Position zur offenen Position gedreht wird.

## Revendications

1. Appareil de formation d'image comprenant :
une cartouche (30) ; et
un corps principal d'appareil (2) auquel la cartouche (30) est fixée de manière détachable, le corps principal d'appareil (2) comportant :
un cadre (222) dans lequel une partie ouverture (900), à travers laquelle la cartouche (30) est fixée au corps principal d'appareil (2), est formée ;
un élément d'ouverture et de fermeture (200) configuré pour bouger entre une position ouverte dans laquelle l'élément d'ouverture et de fermeture (200) est ouvert pour rendre visible la partie ouverture (900) et une position fermée dans laquelle l'élément d'ouverture et de fermeture (200) est fermé pour couvrir la partie ouverture (900), l'élément d'ouverture et de fermeture (200) ayant une partie supportée (220) supportée par le cadre (222) de façon à ce que l'élément d'ouverture et de fermeture (200) puisse tourner autour d'un axe de rotation (220a), l'élément d'ouverture et de fermeture (200) ayant une surface d'empilement (201) sur laquelle une feuille doit être empilée lorsque l'élément d'ouverture et de fermeture (200) se trouve dans la position fermée ;
un rouleau d'évacuation (64) configuré pour évacuer la feuille dans une direction d'évacuation (N) sur la surface d'empilement (201) lorsque l'élément d'ouverture et de fermeture (200) se trouve dans la position fermée ; et
une paroi de régulation (205) configurée pour réguler une position d'un bord en amont, dans la direction d'évacuation (N), de la feuille empilée sur la surface d'empilement (201), la paroi de régulation (205) s'étendant à partir de la surface d'empilement (201) vers le rouleau d'évacuation (64) dans une direction croisant la direction d'évacuation (N),
**caractérisé en ce que** la paroi de régulation (205) est fixée de manière mobile à l'élément d'ouverture et de fermeture (200).

2. Appareil de formation d'image selon la revendication 1,
dans lequel la paroi de régulation (205) est fixée à l'élément d'ouverture et de fermeture (90) de façon à ce que la paroi de régulation (205) pivote autour d'un axe de pivotement (208a) par rapport à l'élément d'ouverture et de fermeture (200), l'axe de pivotement (208a) s'étendant dans une direction de l'axe de rotation et étant disposé à une partie d'extrémité de la paroi de régulation (205) sur un côté de la surface d'empilement (201) dans la direction de croisement, et
dans lequel, tandis que l'élément d'ouverture et de fermeture (200) tourne depuis la position fermée vers la position ouverte, la paroi de régulation (205) pivote en entrant en contact avec une partie (215) du corps principal d'appareil qui est configurée pour ne pas bouger conjointement avec l'élément d'ouverture et de fermeture (200) .

3. Appareil de formation d'image selon la revendication 2,
dans lequel, lorsque la partie d'extrémité de la paroi de régulation est définie comme une première partie d'extrémité, la paroi de régulation a une deuxième partie d'extrémité opposée à la première partie d'extrémité dans la direction de croisement, et
dans lequel le corps principal d'appareil (2) a une butée (207) configurée pour empêcher la paroi de régulation (205) de pivoter autour de l'axe de pivotement (208a) en entrant en contact avec la deuxième partie d'extrémité (204a) de la paroi de régulation lorsque l'élément d'ouverture et de fermeture (200) se trouve dans la position fermée.

4. Appareil de formation d'image selon la revendication 1, dans lequel la partie supportée (220) est agencée en amont du rouleau d'évacuation (64) dans la direction d'évacuation (N).

5. Appareil de formation d'image selon la revendication 1, dans lequel la paroi de régulation (205) pivote, par rapport à l'élément d'ouverture et de fermeture (200), autour d'un axe de pivotement (208a) s'étendant dans une direction de l'axe de rotation lorsque l'élément d'ouverture et de fermeture (200) tourne de la position fermée à la position ouverte.

6. Appareil de formation d'image selon la revendication 2, dans lequel un contact entre la paroi de régulation (205) et la partie (215) du corps principal d'appareil amène la paroi de régulation (205) à pivoter dans une direction de pivotement opposée à une direction de rotation de l'élément d'ouverture et de fermeture (200) tandis que l'élément d'ouverture et de fermeture (200) tourne de la position fermée à la position ouverte.
